# EUROPEAN PATENT SPECIFICATION

(11) **EP 0 716 954 B1**
(45) Date of publication and mention of the grant of the patent: **05.09.2001**
(21) Application number: 95119647.6
(22) Date of filing: 13.12.1995
(51) Int. Cl.: B60Q 1/076

(54) **Optical axis adjusting device for front illumination lamp**
Vorrichtung zum Einstellen der optischen Achse eines Scheinwerfers
Dispositif de réglage de l'axe optique pour un phare

(30) Priority: 14.12.1994 JP 31062694
(43) Date of publication of application: 19.06.1996
(73) Proprietor: ICHIKOH INDUSTRIES LIMITED, Shinagawa-ku Tokyo 141 (JP)
(72) Inventor: Furuya, Takayuki, c/o Ichikoh Ind. Ltd., Isehara-shi, Kanagawa 259-11 (JP)
(74) Representative: Grünecker, Kinkeldey, Stockmair & Schwanhäusser Anwaltssozietät

(56) References cited:
- EP-A- 0 120 442
- DE-U- 9 107 346
- DE-U- 9 407 070
- GB-A- 2 239 513

## Description

This invention relates to an optical axis adjusting device for a front illumination lamp according to the preamble of claim 1.

Such an optical axis adjusting device for a front illumination lamp is known from the closest prior art document DE-U1-91 07 346. As can be taken from said prior art document, the related device comprises a casing accommodating an adjustment shaft received within a hollow shaft. Said hollow shaft is axially movable within an opening of the casing for tilting a vehicle lamp. Furthermore, a worm wheel is accommodated within said casing. Said worm wheel comprises an outer gearing and an inner portion provided with a thread facing a thread portion of the casing. Said outer gearing is engaged with a driving means such that the worm wheel is rotated around the longitudinal axis thereof. Based on the thread portion engaged with the corresponding thread portion of the casing, said worm wheel is also moved in direction of the longitudinal axis thereof in case of rotating the same. Said adjusting shaft comprises a flange portion being clamped at an inner flange of the worm wheel by a clamping member, such that the adjustment shaft is axially movable together with the worm wheel, but not rotated by the rotational movement of said worm wheel. Furthermore, said clamping member comprises a clamping arm for clamping a lever on said worm wheel so that said lever is axially movable with said worm wheel, but in sliding contact with regard to the rotational motion of said worm wheel. Said lever is in contact with a potentiometer which serves as a positioning detecting means.

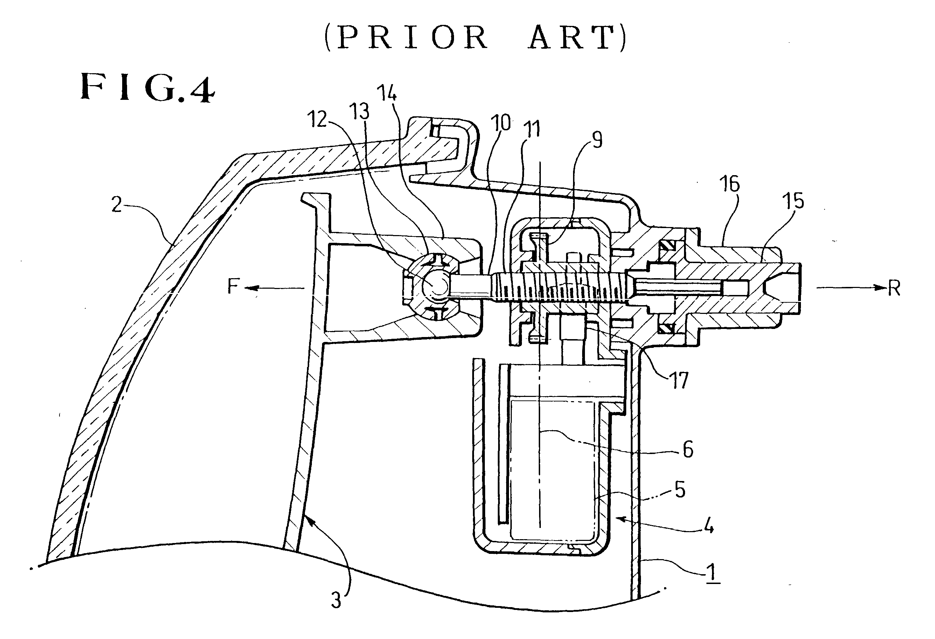

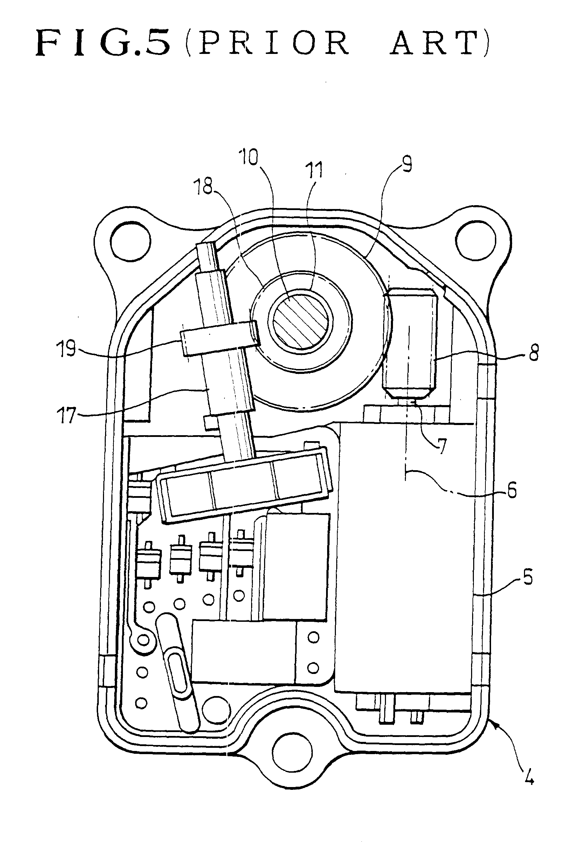

Moreover Fig. 4 is a sectional view of a main portion of a conventional optical axis adjusting device for a front illumination lamp. Fig. 5 is a plan view showing an internal construction of the optical axis adjusting device shown in Fig. 4. In Fig. 4, reference numeral 1 denotes a lamp housing. The lamp housing 1 has a lens 2 attached to and covering a front opening of the lamp housing 1. A reflector 3 supported by the lamp housing 1 is tilted through a ball bearing, not shown. An optical axis adjusting unit 4 is also attached to the lamp housing 1. This optical axis adjusting unit 4 contains a motor 5. Reference numeral 6 denotes a center axis of a rotary shaft 7 (see Fig. 5) of the motor 5. A worm 8, shown in Fig. 5, is attached to the rotary shaft 5. The worm 8 is in mesh with a worm wheel 9 which is, in turn, rotationally driven by the worm 8. A female-thread is formed in an inner wall, which defines a center hole of the worm wheel 9, of the worm wheel 9. The female-thread is in engagement with a male-thread 11 formed on a drive rod 10. The drive rod 10 is reciprocated in an axial direction (forward and backward directions F and R in Fig. 4) in response to rotation of the worm wheel 9. Here, the term "forward" refers to a direction in which the front illumination lamp projects a beam of light.

A spherical end portion 12 is formed on a front end of the drive rod 10. The spherical end portion 12 is relatively rotatably connected to a bracket 14 of the reflector 3 through a mounting member 13. According to this arrangement, the reflector 3 is tilted in response to the reciprocative movement of the drive rod 10, so that the optical axis of the reflector 3 is adjusted.

An aiming member 15 for initial adjustment is disposed on a rear end of the lamp housing 1. The aiming member 15 is rotatably supported by a bearing member 16. This conventional optical axis adjusting device for a front illumination lamp is designed such that when the aiming member 15 is manually turned with a tool, such as a driver, the drive rod 10 is turned in unison with the aiming member 15 and moved forwardly and backwardly under the effect of the male-thread 11. By doing this, an ex-factory basic adjustment (or aiming) is accomplished. At that time, the worm wheel 9 is not rotated because it is in mesh with the worm 8. Reference numeral 17 denotes a rotation angle detector for detecting a tilt angle of the reflector 3. Rotation of the worm wheel 9 is transmitted to the rotation angle detector 17 at a reduced speed.

In the prior art device, the reflector 3 is tiltably supported by the lamp housing 1 and driven by the optical axis adjusting unit 4 for tilting. There is also known another conventional optical axis adjusting device for a front illumination lamp, in which a reflector 3 and a lamp housing 1 are integrally formed, the lamp housing 1 is tiltably supported by a vehicle body or the like, and the lamp housing 1 and the reflector 3 are tilted in unison.

In this conventional optical axis adjusting device, since rotation of a worm wheel 9 for moving a drive rod 10 connected to the reflector 3 (see Fig. 4) is transmitted to a rotation angle detector 17 through a worm 18 and a worm wheel 19 shown in Fig. 5, the tilting angle tends to contain a rotation transmission error due to the effects of backlash of the respective intermediate gears. Further, since it is designed such that rotation of the worm wheel 9 is detected at a reduced speed, the number of component parts is large and the manufacturing cost is relatively high.

From prior art document GB-A-2 239 513 an aimable beam vehicle headlight is known. As can be taken from said prior art document, the related device comprises a drive rod being axially movable for tilting the related headlight. Said drive rod is integrally provided with a rack means which is engaged with a driving gear of a related driving means. As can be taken from the embodiment of figure 4 of said prior art document, a related positioning detecting means consists of a slide potentiometer extending parallel to the drive rod. An input member of said potentiometer consists of a first slide traveling along an opening in the potentiometer. A second slide sleeve means is connected integrally with said first slide via an appendix being integrally provided at said first slide. Said second slide means comprises a hole to receive an end portion of the drive rod so that the drive rod is in frictional contact with said slide and a lock screw is provided for locking said drive rod inside of said hole. For initial adjustment of the headlight, said screw is released and the rod is displaced by the driving means via the above-mentioned rack means. Thus, the initial adjustment of the lamp can be carried out by choosing said lamp in an initial state. Thereafter, the second slide means is moved to place the appendix of the position detecting sensor in a position corresponding to said initial state and said screw is used to connect the rod with the second slide means in said position.

It is an objective of the present invention to provide an optical axis adjusting device for a front illumination lamp as mentioned above, wherein the number of elements is reduced and the construction thereof is simplified.

According to the present invention this objective is solved by an optical axis adjusting device for a front illumination lamp according to claim 1.

Preferred embodiments are laid down in the dependent claims.

Preferably, the screw rod member is provided with an aiming member for use in manual adjustment. It is preferred that the screw rod member is operated to tilt a reflector disposed within a housing, a threaded portion is formed on a distal end portion of the screw rod member, a screw mounting member is turnably provided on the reflector, the threaded portion of the screw rod member is engaged with the screw mounting member, and a rear end portion of the screw rod member is rotatably supported by the housing. Preferably, an annular flange is formed on the screw rod member, and an annular groove for engaging with the annular flange is formed in the forwardly/backwardly movable sleeve member. It is preferred that the stator is secured to the housing. Desirably, a reduction gear mechanism is disposed between the drive rod and the motor.

Advantageously, since a movable element is moved forwardly and backwardly in unison with the drive rod which is moving forwardly and backwardly, errors scarcely occur between an amount of movement of the drive rod and an amount of movement of the movable element. As a consequence, a correct tilting angle of the reflector can be detected.

Moreover, since an amount of movement of the drive rod is detected by the movable element and the stator, a simple construction can be obtained, the number of component parts can be reduced, and a reduced size of the whole device can be realized. As a consequence, a rapid assembling work of the front illumination lamp can easily be performed and the assembling cost can be lowered.

Hereinafter, the present invention is illustrated and explained in further detail by means of a preferred embodiment in conjunction with the accompanying drawings. In the drawings, wherein:
Fig. 1 is a sectional view of a main portion of a front illumination lamp showing one embodiment of an optical axis adjusting device;
Fig. 2 is a sectional view showing an internal construction of an optical axis adjusting unit shown in Fig. 1;
Fig. 3 is a partly sectional view for explaining a gear mechanism for transmitting rotation of a rotary shaft of a motor to a drive rod;
Fig. 4 is a partly sectional view showing a main portion of a front illumination lamp of a conventional optical axis adjusting device; and
Fig. 5 is a sectional view showing an internal construction of an optical axis adjusting unit shown in Fig. 4.

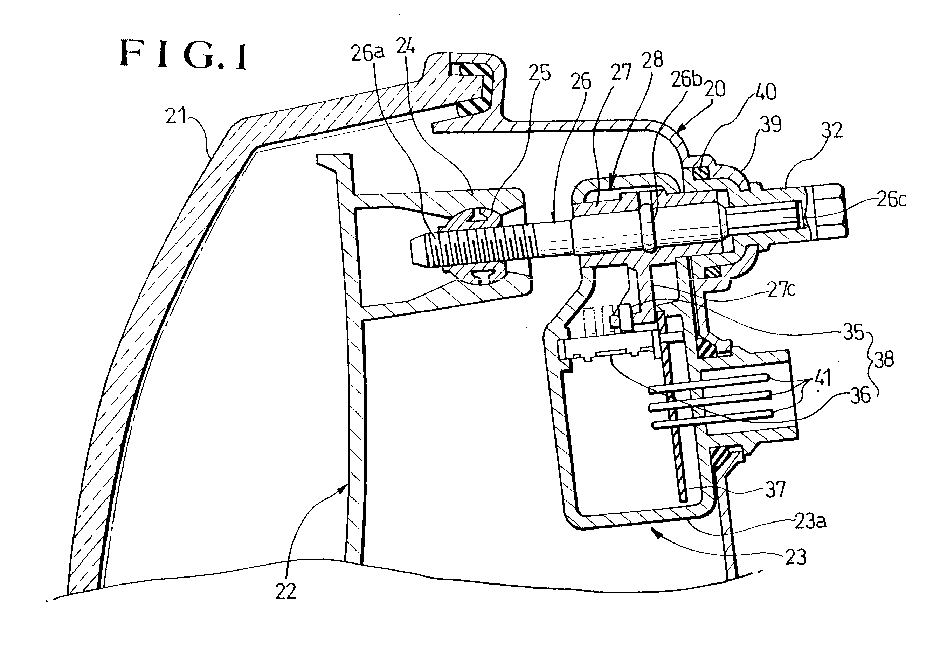

One embodiment will now be described with reference to Figs. 1 through 3.

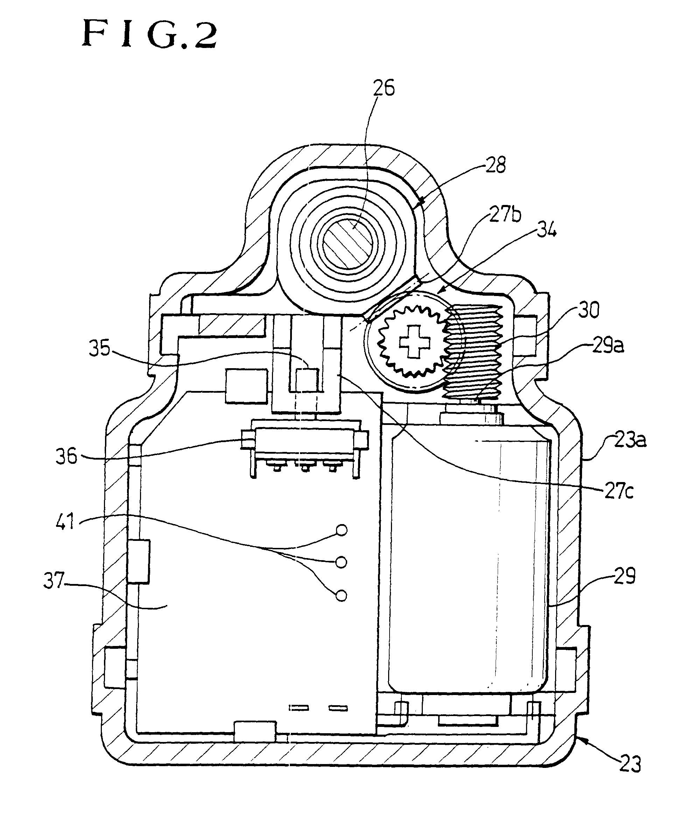

Fig. 1 is a sectional view of a main portion of an optical axis adjusting device for a front illumination lamp. Fig. 2 is a sectional view showing an internal construction of an optical axis adjusting unit shown in Fig. 1.

In Fig. 1, reference numeral 20 denotes a lamp housing. The lamp housing 20 has a lens 21 attached to and covering a front opening portion of the lamp housing 20. A reflector 22 is tiltably supported by the lamp housing 20 through ball bearing, not shown. An optical axis adjusting unit 23 is also attached to the lamp housing 20. An optical axis of the light of the illumination lamp is tilted for adjustment in response to a tilting motion of the reflector 22. The reflector 22 is integrally formed with a bracket 24. A screw mounting member 25 is rotatably supported by the bracket 24. The screw mounting member 25 has a female-thread portion. A screw rod member 26 is in engagement with the screw mounting portion 25. Reference numeral 26a denotes a male-thread portion of the screw rod member 26. The screw rod member 26 and a drive rod 28 constitute a forwardly/backwardly movable sleeve member 27. The forwardly/backwardly movable member 27 is of a two-piece construction here. The screw rod member 26 is inserted into the forwardly/backwardly movable sleeve member 27. Detailed constructions of the forwardly/backwardly movable sleeve member 27 and the screw rod member 26 will be described later. The optical axis adjusting unit 23 will now be described.

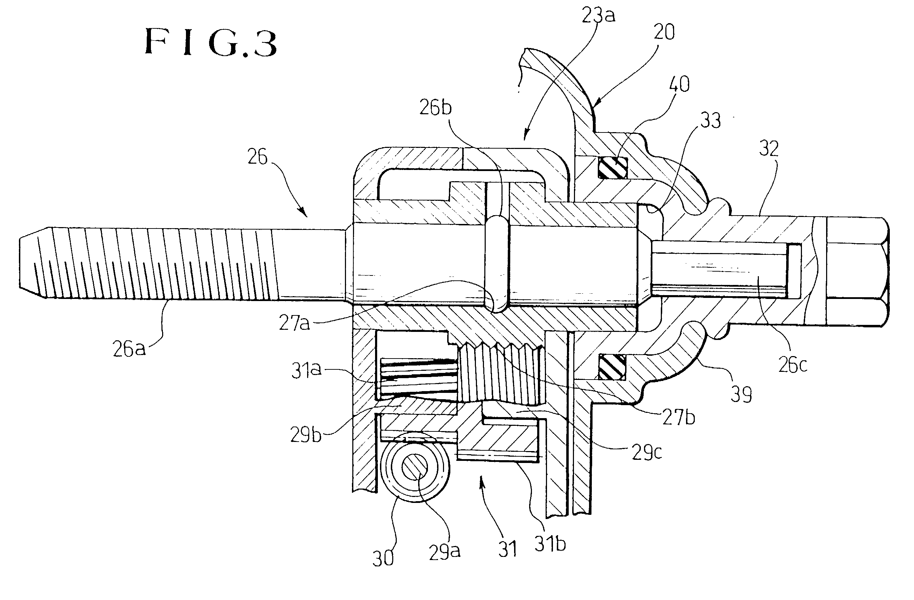

The optical axis adjusting unit 23 includes a casing 23a. A driving motor 29 for adjusting the tilting angle of the reflector 22 is disposed within the casing 23a as shown in Fig. 2. A worm 30 is mounted on an output shaft 29a of the driving motor 29 as shown in Fig. 3. Support shafts 29b and 29c are formed on the casing 23a. A cylindrical threaded member 31 is rotatably supported by the support shafts 29b and 29c. The cylindrical threaded member 31 includes a reduced diameter portion and an enlarged diameter portion. A worm wheel 31a is formed in the reduced diameter portion and a worm 31b is formed on the enlarged diameter portion. The worm wheel 31a is in mesh with the worm 30.

The screw rod member 26 has an annular flange 26b formed on an intermediate portion thereof. A D-shaped portion is formed on a rear end portion 26c of the screw rod member 26. An aiming member 32 is fitted to the D-shaped portion. A guide hole 33 is formed in the aiming member 32, and the forwardly/backwardly movable sleeve member 27 is slidably engaged with the guide hole 33. An annular groove 27a is formed in the center of the forwardly/backwardly movable sleeve member 27, and a worm rack 27b is integrally formed on a lower part thereof. The worm rack 27b is in mesh with the worm 31b. The annular flange 26b is in engagement with the annular groove 27a. The screw rod member 26 is rotatable relative to the forwardly/backwardly movable sleeve member 27.

The aiming member 32 is used for initial adjustment before the devices which are finished products are transported from the factory. When the aiming member 32 is manually rotated with the aid of a tool or the like, the screw rod member 26 is moved forwardly and backwardly while being rotated. Since the worm rack 27b is in mesh with the worm 31b at that time, the forwardly/backwardly movable sleeve member 27 is not moved forwardly and backwardly in response to the forward and backward movement of the screw rod member 26.

The worm 30, worm wheel 21a, and worm 31a constitute, as shown in Fig. 2, a reduction gear mechanism 34 for transmitting the rotation of the driving motor 29 to the forwardly/backwardly movable sleeve member 27 at a reduced speed. The worm rack 27b has a role for transforming the rotation of the reduction gear mechanism 34 to a linear motion. The rotation of the driving motor 29 is transmitted to the drive rod 28 through the reduction gear mechanism 34 and the worm rack 27b. The drive rod 28 is moved forwardly and backwardly in accordance with the normal/reverse rotation of the driving motor 29. A support member 27c is formed on the forwardly/backwardly movable sleeve member 27 as shown in Fig. 1. A movable element 35 is secured to the support member 27c. A stator 36 is secured within the casing 23a. The stator 36 is secured to a circuit board 37. The stator 36 is, for example, a resistor variable element. The movable element 35 is slidably in contact with the stator 36. The movable element 35 and the stator 36 constitute a position sensor 38 for detecting a forward/backward position of the drive rod 28.

In Fig. 1, reference numeral 39 is a bearing portion for rotatably supporting the aiming member 32, reference numeral 40 is a seal member, and reference numeral 41 is a connecting terminal for supply a power source to the circuit board 37.

When the driving motor 29 is rotated, the forwardly/backwardly movable sleeve member 27 is moved forwardly and backwardly in response to the rotation of the driving motor 29. The screw rod member 26 is also moved forwardly and backwardly in unison with the forward and backward movement of the forwardly/backwardly movable sleeve member 27. By doing this, the reflector 22 is tilted through the screw mounting member 25. The control of the driving motor 29 is performed by switching operation from a driving seat of an automobile.

Since the movable element is moved forwardly and backwardly in unison with the forward/backward movement of the drive rod 28, the position of the drive rod 28 can be detected in real time, and the tilting angle of the reflector 22 can be calculated with high precision.

## Claims

1. An optical axis adjusting device for a front illumination lamp with:
a drive rod (28) and a motor (29) for moving said drive rod (28) forwardly and backwardly, for adjusting an optical axis of said front illumination lamp by forward/backward movement of said drive rod (28);
a position detecting sensor (38) having a movable element (35) capable of moving in unison with the forward/backward movement of said drive rod (28); and a stator (36) for detecting a forward/backward position of said drive rod (28) by co-acting with said movable element (35);
wherein said drive rod (28) comprises a forwardly/backwardly movable sleeve member (27) caused to move forwardly/backwardly by rotation of said motor (29), a screw rod member (26) is inserted into said forwardly/backwardly movable sleeve member (27) and being moveable in accordance with the forward/backward movement of said forwardly/backwardly movable sleeve member (27), said screw rod member (26) is relatively rotatable engaged with said forwardly/backwardly movable sleeve member (27), and
an engaging means (27b) for transforming rotation of said motor (29) to a linear motion is formed on said forwardly/backwardly movable sleeve member (27), **characterized in that**
said engaging means is a rack (27b) formed on said forwardly/backwardly movable sleeve member (27), and said movable element (35) is formed on said forwardly/backwardly movable sleeve member (27).

2. An optical axis adjusting device for a front illumination lamp according claim 1, **characterized in that** an annular flange (26b) is formed on said screw rod member (26) and an annular groove (27a) is formed in said forwardly/backwardly movable sleeve member (27) for engaging with said annular flange (26b).

3. An optical axis adjusting device for a front illumination lamp according to claim 1 or 2, **characterized in that** a reduction gear mechanism (34) is disposed between said drive rod (28) and said motor (29).

4. An optical axis adjusting device for a front illumination lamp according to one of the claims 1 to 3, **characterized in that** said screw rod member (26) is provided with an aiming member (32) for use in manual adjustment.

5. An optical axis adjusting device for a front illumination lamp according to one of the claims 1 to 4, **characterized in that** said screw rod member (26) is operated to tilt a reflector (22) disposed within a housing (20).

6. An optical axis adjusting device for a front illumination lamp according to claim 5, **characterized in that** a threaded portion is formed on a distal end portion of said screw rod member (26) and a screw mounting member (25) is turnably provided on said reflector (22), said threaded portion of said screw rod member (26) being engaged with said screw mounting member (25), a rear end portion of said screw rod member (26) being rotatably supported by said housing (20).

7. An optical axis adjusting device for a front illumination lamp according to claim 5 or 6, **characterized in that** said stator (36) is secured to said housing (20).

## Patentansprüche

1. Vorrichtung zur Einstellung der optischen Achse eines Frontscheinwerfers mit:
einem Antriebsstab (28) und einem Motor (29), um den Antriebsstab (28) vorwärts und rückwärts zu bewegen, um die optische Achse des Frontscheinwerfers durch Vorwärts-/Rückwärtsbewegung des Antriebsstabes einzustellen;
einem Positionserfassungssensor (38), der ein bewegbares Element (35) aufweist, das in der Lage ist, sich in Übereinstimmung mit der Vorwärts-/Rückwärtsbewegung des Antriebsstabes zu bewegen;
und einem Stator (36) zur Erfassung einer vorwärts-/rückwärtigen Position des Antriebsstabes (28) durch Zusammenwirken mit dem bewegbaren Element (35);
wobei der Antriebsstab (28) ein vorwärts-/rückwärts bewegbares Hülsenteil (27) aufweist, das durch die Drehung des Motors (29) veranlaßt wird, sich vorwärts/rückwärts zu bewegen, einem Spindelteil (26), das in das vorwärts-/rückwärts bewegbare Hülsenteil (27) eingesetzt und in Übereinstimmung mit der Vorwärts/Rückwärtsbewegung des vorwärts-/rückwärts bewegbaren Hülsenteiles (27) bewegbar ist, wobei das Spindelteil (26) relativ drehbar mit dem vorwärts-/rückwärts bewegbaren Hülsenteil (27) im Eingriff ist, und einer Eingriffseinrichtung (27b) zur Umwandlung der Drehung des Motors (29) in eine lineare Bewegung, die an dem vorwärts-/rückwärts bewegbaren Hülsenteil (27) ausgebildet ist, **dadurch gekennzeichnet, daß** die Eingriffseinrichtung eine Zahnstange (27b) ist, ausgebildet an dem vorwärts-/rückwärts bewegbaren Hülsenteil (27) und das bewegbare Element (35) an dem vorwärts-/rückwärts bewegbaren Hülsenteil (27) ausgebildet ist.

2. Vorrichtung zur Einstellung der optischen Achse eines Frontscheinwerfers nach Anspruch 1, **dadurch gekennzeichnet, daß** ein Ringflansch (26b) an dem Spindelteil (26) ausgebildet ist und eine Ringnut (27a) in dem vorwärts-/rückwärts bewegbaren Hülsenteil (27) ausgebildet ist, um in den Ringflansch einzugreifen.

3. Vorrichtung zur Einstellung der optischen Achse eines Frontscheinwerfers nach Anspruch 1 oder 2, **dadurch gekennzeichnet, daß** eine Untersetzungsgetriebevorrichtung (34) zwischen dem Antriebsstab (28) und dem Motor (29) angeordnet ist.

4. Vorrichtung zur Einstellung der optischen Achse eines Frontscheinwerfers nach einem der Ansprüche 1 bis 3, **dadurch gekennzeichnet, daß** das Spindelteil (26) mit einem Richtteil (32) zur Benutzung in der manuellen Einstellung vorgesehen ist.

5. Vorrichtung zur Einstellung der optischen Achse eines Frontscheinwerfers nach einem der Ansprüche 1 bis 4, **dadurch gekennzeichnet, daß** das Spindelteil (26) betätigt wird, um einen Reflektor (22), angebracht innerhalb eines Gehäuses (20), zu neigen.

6. Vorrichtung zur Einstellung der optischen Achse eines Frontscheinwerfers nach einem der Ansprüche 1 bis 4, **dadurch gekennzeichnet, daß** ein Gewindeabschnitt an einem vorauslaufenden Endabschnitt des Spindelteiles (26) ausgebildet ist und ein Schraubenmontageteil (25) drehbar an dem Reflektor (22) vorgesehen ist, wobei der Gewindeabschnitt des Spindelteiles (26) in Eingriff ist mit dem Schraubenmontageteil (25), ein hinterer Endabschnitt des Spindelteiles (26) ist drehbar durch das Gehäuse (20) gelagert.

7. Vorrichtung zur Einstellung der optischen Achse eines Frontscheinwerfers nach einem der Ansprüche 1 bis 4, **dadurch gekennzeichnet, daß** der Stator (36) an dem Gehäuse (20) befestigt ist.

## Revendications

1. Dispositif de réglage d'axe optique pour un phare avec :
une tige d'entraînement (28) et un moteur (29) pour déplacer vers l'avant et vers l'arrière ladite tige d'entraînement (28), pour régler l'axe optique dudit phare par un mouvement vers l'avant/vers l'arrière de ladite tige d'entraînement (28) ;
un capteur de détection de position (38) comportant un élément mobile (35) capable de se déplacer à l'unisson avec le mouvement vers l'avant/vers l'arrière de ladite tige d'entraînement (28) ;
et un stator (36) pour détecter la position vers l'avant/vers l'arrière de ladite tige d'entraînement (28) en agissant conjointement avec ledit élément mobile (35) ;
dans lequel ladite tige d'entraînement (28) comprend un élément à manchon mobile vers l'avant/vers l'arrière (27) amené à se déplacer vers l'avant/vers l'arrière par rotation dudit moteur (29), un élément de tige à vis (26) est inséré dans ledit élément à manchon mobile vers l'avant/vers l'arrière (27) et étant mobile en fonction du mouvement vers l'avant/vers l'arrière dudit élément à manchon mobile vers l'avant/vers l'arrière (27), ledit élément de tige à vis (26) est relativement en prise de manière rotative avec ledit élément à manchon mobile vers l'avant/vers l'arrière (27) et
un moyen d'engagement (27b) pour transformer la rotation dudit moteur (29) en un mouvement linéaire est formé sur ledit élément à manchon mobile vers l'avant/vers l'arrière (27), **caractérisé en ce que**
ledit moyen d'engagement est une crémaillère (27b) formée sur ledit élément à manchon mobile vers l'avant/vers l'arrière (27) et ledit élément mobile (35) est formé sur ledit élément à manchon mobile vers l'avant/vers l'arrière (27) .

2. Dispositif de réglage d'axe optique pour un phare selon la revendication 1, **caractérisé en ce qu**'une bride annulaire (26b) est. formée sur ledit élément de tige à vis (26) et une gorge annulaire (27a) est formée dans ledit élément à manchon mobile vers l'avant/vers l'arrière (27) pour engagement avec ladite bride annulaire (26b).

3. Dispositif de réglage d'axe optique pour un phare selon la revendication 1 ou 2, **caractérisé en ce qu**'un mécanisme d'engrenages de réduction (34) est disposé entre ladite tige d'entraînement (28) et ledit moteur (29).

4. Dispositif de réglage d'axe optique pour un phare selon l'une des revendications 1 à 3, **caractérisé en ce que** ledit élément de tige à vis (26) est doté d'un élément de direction (32) destiné à être utilisé dans un réglage manuel.

5. Dispositif de réglage d'axe optique pour un phare selon l'une des revendications 1 à 4, **caractérisé en ce que** ledit élément de tige à vis (26) est actionné de manière à basculer un réflecteur (22) disposé à l'intérieur d'un boîtier (20).

6. Dispositif de réglage d'axe optique pour un phare selon la revendication 5, **caractérisé en ce qu**'une partie filetée est formée sur une partie d'extrémité distale dudit élément de tige à vis (26) et un élément de montage de vis (25) est prévu de manière rotative sur ledit réflecteur (22), ladite partie filetée dudit élément de tige à vis (26) étant en prise avec ledit élément de montage de vis (25), une partie d'extrémité arrière dudit élément de tige à vis (26) étant soutenue de manière rotative par ledit boîtier (20).

7. Dispositif de réglage d'axe optique pour un phare selon la revendication 5 ou 6, **caractérisé en ce que** ledit stator (36) est fixé audit boîtier (20).
